# EUROPÄISCHE PATENTSCHRIFT

(11) **EP 1 083 151 B1**
(45) Veröffentlichungstag und Bekanntmachung des Hinweises auf die Patenterteilung: **23.01.2002**
(21) Anmeldenummer: 00115181.0
(22) Anmeldetag: 13.07.2000
(51) Int. Cl.: C01F 7/02, C01F 7/30

(54) **Pyrogen hergestelltes Aluminiumoxid**
Pyrogenically prepared alumina
Alumine préparé par voie pyrogenique

(30) Priorität: 10.09.1999 DE 19943291
(43) Veröffentlichungstag der Anmeldung: 14.03.2001
(73) Patentinhaber: Degussa AG, 40474 Düsseldorf (DE)
(72) Erfinder: Plambeck-Fischer, Peer, Dr., 79618 Rheinfelden (DE); Hamm, Volker, 79713 Bad Säckingen (DE); Scharfe, Thomas, 63755 Alzenau (DE); Mangold, Helmut, Dr., 63517 Rodenbach (DE); Hennig, Thomas, Dr., 63571 Gelnhausen (DE)

(56) Entgegenhaltungen:
- EP-A- 0 023 588
- EP-A- 0 395 925
- EP-A- 0 717 008
- EP-A- 0 802 158
- DE-C- 4 035 089

## Beschreibung

Die Erfindung betrifft ein pyrogen hergestelltes Aluminiumoxid, ein Verfahren zu seiner Herstellung sowie seine Verwendung.

Für den Einsatz in der Papierindustrie werden leicht dispergierbare Füllstoffe benötigt, die bei der Verwendung in Inkjet-Papier oder Inkjet-Folien die Tinte schnell absorbieren und den Farben zu einer hohen Farbbrillanz verhelfen. Die vorliegende Erfindung betrifft ein speziell hergestelltes Aluminiumoxid, welches durch seine Eigenschaften in entsprechenden Streichfarbenrezepturen, in der Lage ist, Tinten, die von einem Inkjet-Drucker auf diese, dieses spezielle Aluminiumoxid enthaltene Medien, appliziert werden, mit sehr hoher Farbbrillanz und Farbtreue wiederzugeben.

Sie betrifft weiterhin die Anwendung dieses Aluminiumoxids bei der Herstellung von Tintenempfangsschichten, wie sie bei Inkjet-Medien ( z.B. Papier, Folien, Stoff, usw.) üblich sind.

Gegenstand der Erfindung ist ein hochoberflächiges pyrogen hergestelltes Aluminiumoxid, welches dadurch gekennzeichnet ist, daß die spezifische Oberfläche nach BET mehr als 115 m²/g aufweist, die Sears-Zahl mehr als 8 ml/2g und die Dibutylphtalatabsorption des Pulvers gemessen mit 16 g Einwaage nicht meßbar ist (keine Endpunktserkennung).

Das erfindungsgemäße, pyrogen hergestellte Aluminiumoxid kann nach der Art der Flammenoxidation oder bevorzugt der Flammenhydrolyse hergestellt werden, wobei als Ausgangsmaterial eine verdampfbare Aluminiumverbindung, bevorzugt das Chlorid, benutzt wird.

Ein weiterer Gegenstand der Erfindung ist die Verwendung des erfindungsgemäßen Aluminiumoxids als tintenabsorbierende Substanz in Ink-Jet-Medien.

Ein weiterer Gegenstand der Erfindung ist die Verwendung des erfindungsgemäßen hochoberflächigen Aluminiumoxids als Füllstoff, als Trägermaterial, als katalytisch aktive Substanz, als Ausgangsmaterial zur Herstellung von Dispersionen, als Poliermaterial (CMP-Anwendungen), als keramischer Grundstoff, in der Elektronikindustrie, in der Kosmetikindustrie, als Additiv in der Silikon- und Kautschukindustrie, zur Einstellung der Rheologie von flüssigen Systemen, zur Hitzeschutzstabilisierung, in der Lackindustrie.

Das erfindungsgemäße pyrogen hergestellte Aluminiumoxid als tintenabsorbierende Substanz weist die folgenden Eigenschaften auf: Gute optische Dichte und Auflösung der Punkte, hohe Tintenabsorption, schnelle Tintentrocknungszeit, kein Bleeding (Ineinanderlaufen der Tinten), nach der Trocknung gute Wasserbeständigkeit, keine Farbverschiebungen, keine Zerstörung der Tinten nach langer Zeit.

Im Vergleich zu bekannten kommerziell erhältlichen Produkten ( Aluminiumoxid C und Aerosil MOX 170, beide Degussa-Hüls AG) zeigt das erfindungsgemäße Aluminiumoxid sehr gute Eigenschaften bei der Herstellung von Inkjet-Empfangschichten sowohl alleine als auch in Kombination mit anderen Füllstoffen. Es zeichnet sich durch eine größere Farbbrillanz und Farbtiefe aus. Diese Eigenschaften werden besonders bei Tintenempfangsschichten, die zur fotorealistischen Wiedergabe verwendet werden, benötigt. Auch die Wetterbeständigkeit gegen Wasser und Licht ist erhöht, was bei Außeneinsatz von Vorteil ist.

### Beispiel 1

In einem Brenner bekannter Bauart werden 320 kg/h zuvor verdampftes Aluminiumtrichlorid (AlCl₃) zusammen mit 100 Nm³/h Wasserstoff und 450 Nm³/h Luft gemeinsam verbrannt.

Das feinteilige hochoberflächige Aluminiumoxid wird nach der Flammenreaktion in einem Filter oder Zyklon von den gleichfalls entstandenen Salzsäuregasen abgetrennt, wobei anschließend noch anhaftende HCl-Spuren durch Behandlung mit befeuchteter Luft bei erhöhter Temperatur entfernt werden.

Das entstandene hochoberflächige pyrogene Aluminiumoxid weist dabei die in Tabelle 1 gezeigten physikalischchemischen Kenndaten auf. In Tabelle 1 sind zum Vergleich die Daten des kommerziell erhältlichen pyrogenen Aluminiumoxids der Fa. Degussa-Hüls AG/Frankfurt mit aufgeführt. (Handelsname Aluminiumoxid C)

**Tabelle 1**

| | **Einheit** | **Erfindungsgemäßes hochoberflächiges Aluminiumoxid** **Alu 130** | **Aluminiumoxid C** |
|---|---|---|---|
| BET | m²/g | 121 | 100 |
| Spezifische Oberfläche | | | |
| Sears-Zahl (pH 4 bis 9) | ml/2g | 9,38 | 7,05 |
| pH | 4%-wäßrige Dispersion | 4,93 | 4,5 |
| Trocknungsverlust | Gew.% | 3,3 | 3,0 |
| Schüttdichte | g/l | 55 | 48 |
| Stampfdichte | g/l | 63 | 57 |
| DBP-Absorption | Gew.% | nicht meßbar, | 231 |
| | | kein Endpunkt | |
| | | festzustellen. | |
| DBP: Dibutylphtalat | | | |

Die Messung der Sears-Zahl wird in EP 0 717 008 beschrieben.

### Beispiel 2

### Herstellung der Streichfarbe und Beschichtung:

30 Massenteile Polyvinylalkohol Mowiol 28-99 ( Firma Clariant), 80 Massenteile Sipernat 310 ( Fällungskieselsäure, Degussa-Hüls AG) und jeweils 20 Massenteile der obengenannten pyrogen hergestellten Oxide werden eingesetzt. Der Feststoffgehalt wird auf 18 % eingestellt . Diese wäßrige Dispersion wird mit einem Dissolver 30 min bei 3000 U/min gerührt. Diese Streichfarbe wird mittels eines profilierten Rakelstabes auf eih 70 g/ m² Basispapier aufgetragen. Die Streichfarbe wird mit heißer Luft getrocknet. Das Auftragsgewicht beträgt im trockenen Zustand 10 g/m².

### Ergebnisse

| | Aerosil MOX 170 | Aluminiumoxid C | Alu 130 |
|---|---|---|---|
| Farbbrillanz | gut | gut-sehr gut | sehr gut |
| Wetterbeständigkeit | befriedigend | gut | gut-sehr gut |

### Beispiel 3

### Herstellung der Streichfarbe:

35 Massenanteile Polyvinylalkohol Mowiol 28-99 (Clariant) und jeweils 100 Massenanteile der obengenannten pyrogen hergestellten Oxide werden eingesetzt. Der Feststoffgehalt wird auf 15 % eingestellt. Diese Dispersion wird homogenisiert. Diese Streichfarbe wird auf eine 100 Mikrometer dikke Polyesterfolie mittels eines profilierten Rakelstabes aufgetragen. Die Streichfarbe wird mit heißer Luft getrocknet. Die Naßfilmdicke beträgt 120 Mikrometer.

### Ergebnisse

| | Aerosil MOX 170 | Alu C | Alu 130 |
|---|---|---|---|
| Haftung auf Folie | ausreichend-befriedigend | gut | gut-sehr gut |
| Farbbrillianz | befriedigend | gut | gut-sehr gut |
| Wetterbeständigkeit | befriedigend | gut | gut-sehr gut |
| Tintenabsorbtion | Gut-befriedigend | gut | sehr gut |
| Glanz | gut-befriedigend | gut-sehr gut | sehr gut |

### Beispiel 4

### Herstellung der Streichfarbe:

70 Massenteile Polyvinylalkohol Mowiol 5-88 ( Clariant), 20 Massenteile PVP/VA W-735 ( Polyvinylpyrrolidone-Polyvinylacetat-Copolymer, ISP), 10 Teile Polyvinylpyrrolidon K-30 (ISP) und jeweils 50 Teile der oben genannten pyrogen hergestellten Oxide werden eingesetzt.

Der Feststoffgehalt wird auf 20 % eingestellt. Die Streichfarbe wird mittels eines profilierten Rakelstabes mit einer Naßfilmdicke von 80 Mikrometern auf ein 100 Mikrometer dikke Polyesterfolie aufgetragen. Die Streichfarbe wird mit heißer Luft getrocknet.

### Ergebnisse

| | Aerosil MOX 170 | Alu C | Alu 130 |
|---|---|---|---|
| Farbbrillanz | gut | gut-sehr gut | sehr gut |
| Wetterbeständigkeit | befriedigend-gut | gut | gut-sehr gut |
| Transparenz | befriedigend | gut | gut-sehr gut |
| Glanz | befriedigend-gut | gut-sehr gut | sehr gut |

Diese Ergebnisse zeigen die anwendungstechnischen Vorteile des erfindungsgemäßen Aluminiumoxides Alu 130.

### Beispiel 5

Zum Vergleich werden neben dem erfindungsgemäßen hochoberflächigen Aluminiumoxid 130 noch Aluminiumoxid C und MOX 170 ( beides Fa. Degussa-Hüls AG Frankfurt) eingesetzt.

### Herstellung der Streichfarbe und Beschichtung:

Lösung A ist eine (bezogen auf PVA) 10-prozentige wäßrige Lösung von Polyvinylalkohol (Feststoff, Abkürzung PVA) Mowiol 28-99 der Fa. Clariant.

Diese Lösung wird mit destilliertem Wasser versetzt, so daß eine Lösung B entsteht. Diese Lösung B wird mit Sipernat 310 ( Fällungskieselsäure, Degussa-Hüls AG) und jeweils den pyrogen hergestellten Oxiden zur Bildung der Streichfarbe C versetzt. Diese Streichfarbe weist ein Massenverhältnis von 80 Teilen Sipernat 310 zu 20 Teilen pyrogenes Oxid zu 30 Teilen PVA, bezogen auf die Feststoffe, auf. Der Gesamtfeststoffgehalt beträgt 18 %.

Die Streichfarbe C wird mit einem Dissolver 30 Minuten bei 3000 U/min dispergiert. Die Streichfarbe wird anschliessend mittels eines profilierten Rakelstabes auf ein 70 g / m² Basispapier aufgetragen und mit heißer Luft getrocknet. Das Auftragsgewicht beträgt im trockenen Zustand 10 g / m².

Die Drucktests werden auf einem Epson Stylus Colour 800 mit höchster Auflösung ( 1440 * 720 dpi ) durchgeführt.

### Ergebnisse

| | Aerosil MOX 170 | Alu C | erfindungsgemäßes hochoberflächiges Aluminiumoxid |
|---|---|---|---|
| Farbintensität | gut | gut-sehr gut | sehr gut |
| Farbbeständigkeit | befriedigend | gut | gut-sehr gut |

### Beispiel 6

### Streichfarbenformulierung

Zum Vergleich werden als weitere Oxide neben dem erfindungsgemäßen hochoberflächigen Aluminiumoxid 130 noch Aluminiumoxid C und MOX 170 ( beides Fa. Degussa-Hüls AG Frankfurt) eingesetzt.

Von diesen drei unterschiedlichen pyrogenen Oxiden wird eine wäßrige Dispersion hergestellt. Dies geschieht unter Verwendung eines Rotor-Stator-Systems (Ultra-Turrax) bei einer Dispersionszeit von 30 Minuten in einem doppelwandigen Gefäß (mit Wasserkühlung). Es wirde eine (bezogen auf den Feststoff) 25-prozentige Dispersion ( w = 0,25 ) hergestellt, welche einen Massenanteil von 0,5 % Esssigsäure beinhaltet.

### Herstellung der Streichfarbe:

Lösung A ist eine (bezogen auf PVA) 8-prozentige wäßrige Lösung von Polyvinylalkohol ( Feststoff, Abkürzung PVA) Mowiol 40-88 der Fa. Clariant.

Diese Lösung A wird mit destilliertem Wasser verdünnt, so daß eine Lösung B entsteht. Die Lösung B wird jeweils mit den verschiedenen Metalloxid-Dispersionen versetzt und eine Streichfarbe C gebildet. Die Streichfarbe C weist ein Massenverhältnis von 100 Teilen pyrogenes Oxid zu 25 Teilen PVA, bezogen auf den Feststoff, auf. Der Gesamtfeststoffgehalt beträgt 15 %. Diese Streichfarbe wird auf eine 100 Mikrometer dicke Polyesterfolie mittels eines profilierten Rakelstabes aufgetragen und mit heißer Luft getrocknet. Die Naßfilmdicke beträgt 120 Mikrometer.

Mit dem Aerosil MOX 170 war es nicht möglich eine haftende Beschichtung herzustellen. Für dieses Mischoxid muß der Anteil bis auf ein Verhältnis von 100 Teilen Aerosil zu 40 Teilen PVA, bezogen auf das Feststoffverhältnis, angehoben werden.

### Ergebnisse

| | Aerosil MOX 170 | Alu C | Erfindungsgemäßes hochoberflächiges Aluminiumoxid |
|---|---|---|---|
| Haftung auf Folie | ausreichend | gut | Gut-sehr gut |
| Farbbrillanz | befriedigend | Gut-sehr gut | Sehr gut |
| Farbbeständigkeit | befriedigend | Gut-sehr gut | Sehr gut |
| Tintenabsorption | Sehr gut | gut | Gut-sehr gut |
| Glanz | Mangelhaft | Gut-sehr gut | Sehr gut |

### Beispiel 7

### Streichfarbenformulierung

Zum Vergleich werden als weitere Oxide neben dem erfindungsgemäßen hochoberflächigen Aluminiumoxid 130 noch Aluminiumoxid C und MOX 170 ( beides Fa. Degussa-Hüls AG Frankfurt) eingesetzt.

Lösung A ist eine ( bezogen auf PVA 20-prozentige wäßrige Lösung von Polyvinylalkohol ( Feststoff, Abkürzung PVA ) 4-88 der Firma Clariant.

Lösung B ist eine ( bezogen auf das Copolymer ) 50 -prozentige wäßrige Lösung von eine Copolymer aus Vinylpyrrolidon und Vinylacetat ( Abkürzung PVP / VA ) W 735 der Firma ISP.

Lösung C ist eine ( bezogen auf PVP ) 20- prozentige wäßrige Lösung von Polyvinylpyrrolidon ( Abkürzung PVP ) K - 30 der Firma ISP.

Diese drei Lösungen werden in der obengenannten Reihenfolge und in folgendem Verhältnis gemischt ( 70 Massenteile PVA : 20 Teile PVP / VA : 10 Teile PVP, bezogen auf den FestStoff) und mit Wasser verdünnt, so daß man beim Zufügen von 50 Teilen der jeweiligen Metalloxide, eine Streichfarbe mit einem Gesamtfeststoffgehalt von 20 % erhält. Diese Dispersion wird mittels eines geeigneten Dispersionsgerätes, wie z.B. wie eines Ultra-Turrax der Fa. Janke und Kunkel mit einem Rotor-Stator-System, für 30 Minuten bei 10000 Umdrehungen pro Minute dispergiert. Die Streichfarbe wird mittels eines profilierten Rakelstabes mit einer Naßfilmdicke von 80 Mikrometern auf ein 100 Mikrometer dicke Polyesterfolie aufgetragen und mit heißer Luft getrocknet.

### Ergebnisse

| | Aerosil MOX 170 | Alu C | erfindungsgemäßes hochoberflächiges Aluminiumoxid |
|---|---|---|---|
| Farbbrillanz | gut | gut-sehr gut | sehr gut |
| Farbbeständigkeit | befriedigend-gut | gut | gut-sehr gut |
| Transparenz | befriedigend | gut | gut-sehr gut |
| Glanz | befriedigend-gut | gut-sehr gut | sehr gut |

### Vorteile:

Im Vergleich zu den kommerziell erhältlichen Produkten (Aluminiumoxid C und Aerosil MOX 170, beide Degussa-Hüls AG) zeigt das erfindungsgemäße Aluminiumoxid sehr gute Eigenschaften bei der Herstellung von Inkjet-Empfangschichten sowohl alleine als auch in Kombination mit anderen Füllstoffen. Es zeichnet sich durch eine größere Farbbrillanz und Farbtiefe aus. Diese Eigenschaften werden besonders bei Tintenempfangsschichten, die zur fotorealistischen Wiedergabe verwendet werden, benötigt. Auch die Farbbeständigkeit gegen Wasser und Licht ist erhöht, was bei Außeneinsatz von Vorteil ist.

## Patentansprüche

1. Hochoberflächiges pyrogen hergestelltes Aluminiumoxid, **dadurch gekennzeichnet, daß** die spezifische Oberfläche nach BET mehr als 115 m²/g aufweist, die Sears-Zahl mehr als 8 ml/2g und die Dibutylphtalatabsorption des Pulvers gemessen mit 16 g Einwaage nicht meßbar ist (keine Endpunktserkennung).

2. Pyrogen hergestelltes Aluminiumoxid gemäß Anspruch 1, **dadurch gekennzeichnet, daß** es nach der Art der Flammenoxidation oder bevorzugt der Flammenhydrolyse hergestellt wird, wobei als Ausgangsmaterial eine verdampfbare Aluminiumverbindung bevorzugt das Chlorid benutzt wird.

3. Verwendung des hochoberflächigen Aluminiumoxids gemäß Anspruch 1 als tintenabsorbierende Substanz in Ink-Jet-Medien.

4. Verwendung des hochoberflächigen Aluminiumoxids gemäß Anspruch 1 als Füllstoff, als Trägermaterial, als katalytisch aktive Substanz, als Ausgangsmaterial zur Herstellung von Dispersionen, als Poliermaterial (CMP-Anwendungen), als keramischen Grundstoff, in der Elektronikindustrie, in der Kosmetikindustrie, als Additiv in der Silikon- und Kautschukindustrie, zur Einstellung der Rheologie von flüssigen Systemen, zur Hitzeschutzstabilisierung, in der Lackindustrie.

## Claims

1. High surface area pyrogenically produced aluminium oxide, **characterised in that** the BET specific surface area is greater than 115 m²/g, the Sears index is over 8 ml/2g and the dibutyl phthalate absorption of the powder measured with a 16 g weighed portion is not measurable (no end-point detection).

2. Pyrogenically produced aluminium oxide according to claim 1, **characterised in that** it is produced by means of flame oxidation or preferably flame hydrolysis, whereby a vaporisable aluminium compound, preferably chloride, is used as starting material.

3. Use of the high surface area aluminium oxide according to claim 1 as an ink-absorbing substance in inkjet media.

4. Use of the high surface area aluminium oxide according to claim 1 as a filler, as a substrate, as a catalytically active substance, as a starting material for the production of dispersions, as a polishing material (CMP applications), as a ceramic raw material, in the electronics industry, in the cosmetics industry, as an additive in the silicone and rubber industry, to adjust the rheology of liquid systems, as a heat stabiliser, in the paint industry.

## Revendications

1. Oxyde d'aluminium produit par voie pyrogénique à surface élevée,
**caractérisé en ce que**
la surface spécifique déterminée selon la méthode BET dépasse 115 m²/g, l'indice de Sears plus de 8 ml/2g et l'absorption de phtalate de dibutyle de la poudre mesurée avec une prise d'essai de 16 g n'est pas mesurable (aucune identification d'un point final).

2. Oxyde d'aluminium produit par voie pyrogénique conformément à la revendication 1,
**caractérisé en ce qu'**
il est produit selon la manière de l'oxydation de flamme ou de préférence - de l'hydrolyse de flamme, dans lequel comme matériau de départ, on utilise un composé d'aluminium qu'on peut évaporer, de préférence le chlorure.

3. Utilisation de l'oxyde d'aluminium à surface élevée conformément à la revendication 1, comme substance qui absorbe de l'encre dans des milieux à jet d'encre.

4. Utilisation de l'oxyde d'aluminium à surface élevée, conformément à la revendication 1, comme substance de charge, comme matériau support, comme substance active catalytiquement, comme matériau de départ pour la production de dispersions, comme matériau de polissage (utilisations pour CMP), comme substance de base en céramique, dans l'industrie électronique, dans l'industrie cosmétique, comme additif dans l'industrie des silicones et du caoutchouc, pour la régulation de la rhéologie de systèmes liquides, pour la stabilisation de la protection à la chaleur dans l'industrie des laques.
